# EUROPEAN PATENT APPLICATION

(11) **EP 4 636 641 A1**
(43) Date of publication of application: **22.10.2025**
(21) Application number: 23933799.1
(22) Date of filing: 08.11.2023
(51) Int. Cl.: G06F 40/174, G06V 30/413

(54) **TABLE EXTRACTION METHOD, ELECTRONIC DEVICE AND MEDIUM**

(30) Priority: 21.04.2023 CN 202310442919
(71) Applicant: Honor Device Co., Ltd., Shenzhen, Guangdong 518040 (CN)
(72) Inventor: DING, Yiyan, Shenzhen, Guangdong 518040 (CN); HUANG, Liwei, Shenzhen, Guangdong 518040 (CN); XU, Chaojin, Shenzhen, Guangdong 518040 (CN); ZHAO, Kun, Shenzhen, Guangdong 518040 (CN)
(74) Representative: Gill Jennings & Every LLP
(86) International application number: PCT/CN2023/130397
(87) International publication number: WO 2024/216932

(57) **Abstract**

This application discloses a table extraction method, an electronic device, and a medium, and relates to the field of computer technologies. The method includes: displaying a table box selection interface, where the table box selection interface includes an extraction control, a table image, and a plurality of pre-selection boxes, and the plurality of pre-selection boxes are used to box-select a plurality of table areas in the table image; highlighting a selected pre-selection box in the table box selection interface in response to a selection operation on the plurality of pre-selection boxes; and in response to a tap operation on the extraction control, obtaining a spreadsheet based on a table area box-selected by the selected pre-selection box. The method improves table extraction efficiency.

## Description

This application claims priority to Chinese Patent Application No. 202310442919.5, filed with the China National Intellectual Property Administration on April 21, 2023 and entitled "TABLE EXTRACTION METHOD, ELECTRONIC DEVICE, AND MEDIUM", which is incorporated herein by reference in its entirety.

### TECHNICAL FIELD

This application relates to the field of computer technologies, and in particular, to a table extraction method, an electronic device, and a medium.

### BACKGROUND

With development of computer technologies, functions of electronic devices are gradually improved. A mobile phone is used as an example. The mobile phone can implement a voice call, and also can install various applications to implement functions such as office work.

Currently, the mobile phone may install a spreadsheet application. Based on the spreadsheet application, a user can create various spreadsheets on the mobile phone. When the user needs to extract a table in a paper document as a spreadsheet, the user needs to first create a spreadsheet on the mobile phone, and then fill in data in the spreadsheet, to complete table extraction.

However, the foregoing table extraction manner is relatively cumbersome, which reduces table extraction efficiency.

### SUMMARY

This application provides a table extraction method, an electronic device, and a medium, which can improve table extraction efficiency.

To achieve the foregoing objective, the following technical solutions are used in this application:

According to a first aspect, this application provides a table extraction method, and the method may be applied to an electronic device. The method includes: displaying a table box selection interface, where the table box selection interface includes an extraction control, a table image, and a plurality of pre-selection boxes, and the plurality of pre-selection boxes are used to box-select a plurality of table areas in the table image; highlighting a selected pre-selection box in the table box selection interface in response to a selection operation on the plurality of pre-selection boxes; and in response to a tap operation on the extraction control, obtaining a spreadsheet based on a table area box-selected by the selected pre-selection box.

In this method, a user needs to perform only viewfinding on a target object by using the electronic device, for example, photograph a table in the target object, to obtain a table image including the table, and then tap the extraction control in the box selection interface, so that the electronic device can generate a spreadsheet corresponding to the table image. It may be learned that in the method, the user does not need to manually create a table, adjust the table, and input table content, thereby improving table extraction efficiency. In addition, the method further supports simultaneously extracting a plurality of tables in the target object, thereby further improving efficiency.

In some possible implementations, the obtaining a spreadsheet based on a table area box-selected by the selected pre-selection box may be: sending, to a server, the table image and/or a box-selected image corresponding to the table area selected by the selected pre-selection box; performing, by the server, identification based on the table image and/or the box-selected image to obtain a table identification result, where the table identification result includes a quantity of rows and a quantity of columns of a table, content in the table, and a location of each piece of content in the table; receiving the table identification result fed back by the server based on the table image and/or the box-selected image; and obtaining the spreadsheet based on the table identification result. Further, the server may further identify a length-width ratio of each cell in the table, then, add the length-width ratio of each cell to the table identification result, and send the table identification result to the electronic device, so that the electronic device displays a preview table with a consistent length-width ratio, to improve user feeling.

In some possible implementations, the obtaining the spreadsheet based on the table identification result may be: displaying a comparison preview interface based on the table identification result, where the comparison preview interface includes an export control, a plurality of box-selected images, and a plurality of preview tables corresponding to the plurality of box-selected images; and obtaining spreadsheets corresponding to the plurality of preview tables in response to a tap operation on the export control.

In some possible implementations, the method further includes: adjusting at least one preview table in the plurality of preview tables in response to an editing operation on the at least one preview table; and the obtaining spreadsheets corresponding to the plurality of preview tables in response to a tap operation on the export control may be: in response to the tap operation on the export control, obtaining a spreadsheet corresponding to an adjusted preview table and/or a spreadsheet corresponding to an unadjusted preview table.

In some possible implementations, the method further includes: displaying a first enlarged display interface in response to a tap operation on the box-selected image, where the enlarged display interface includes an enlarged image of the box-selected image.

In some possible implementations, the method further includes: displaying a second enlarged display interface in response to a tap operation on the preview table, where the second enlarged display interface includes an enlarged version of the preview table.

In some possible implementations, the second enlarged display interface further includes a format control, and the method further includes: obtaining the spreadsheets corresponding to the plurality of preview tables in response to a tap operation on the format control, where a format of the spreadsheet is a preset format corresponding to the format control.

In some possible implementations, the method further includes: displaying a viewfinder interface, where the viewfinder interface includes a preview image and a viewfinder control; and the displaying a table box selection interface includes: displaying a box selection interface in response to a tap operation on the viewfinder control.

According to a second aspect, this application provides a table extraction method, and the method includes:
displaying a table box selection interface, where the table box selection interface includes an extraction control, a table image, and a pre-selection box, and the pre-selection box is used to box-select a table area in the table image; and
in response to a tap operation on the extraction control, obtaining a spreadsheet based on a table area box-selected by the pre-selection box.

According to a third aspect, this application provides an electronic device, including a camera, a processor, and a memory.

The camera collects an image; and
the memory stores one or more computer programs, and the one or more computer programs include instructions; and when the instructions are executed by the processor, the electronic device is enabled to perform the method according to any one of the first aspect or the second aspect.

According to a fourth aspect, a computer storage medium is provided, including computer instructions. When the computer instructions are run on an electronic device, the electronic device is enabled to perform the method according to any one of the first aspect or the second aspect.

According to a fifth aspect, this application provides a computer program product, including instructions. When the instructions are run on an electronic device, the electronic device is enabled to perform the method according to any one of the first aspect or the second aspect.

The technical solutions of this application have the following beneficial effects.

This application provides the table extraction method. The method includes: displaying a table box selection interface, where the table box selection interface includes an extraction control, a table image, and a plurality of pre-selection boxes, and the plurality of pre-selection boxes are used to box-select a plurality of table areas in the table image; highlighting a selected pre-selection box in the table box selection interface in response to a selection operation on the plurality of pre-selection boxes; and in response to a tap operation on the extraction control, obtaining a spreadsheet based on a table area box-selected by the selected pre-selection box. In this method, a user needs to perform only viewfinding on a target object by using the electronic device, for example, photograph a table in the target object, to obtain a table image including the table, and then tap the extraction control in the box selection interface, so that the electronic device can generate a spreadsheet corresponding to the table image. It may be learned that in the method, the user does not need to manually create a table, adjust the table, and input table content, thereby improving table extraction efficiency.

It should be understood that descriptions of technical features, technical solutions, beneficial effects, or similar expressions in this application do not imply that all features and advantages can be achieved in any single embodiment. On the contrary, it may be understood that descriptions of features or beneficial effects mean that specific technical features, technical solutions, or beneficial effects are included in at least one embodiment. Therefore, the descriptions of the technical features, the technical solutions, or the beneficial effects in the specification do not necessarily mean a same embodiment. Further, the technical features, the technical solutions, and the beneficial effects described in the embodiments may be combined in any appropriate manner. A person skilled in the art should understand that an embodiment may be implemented without one or more specific technical features, technical solutions, or beneficial effects in a specific embodiment. In other embodiments, additional technical features and beneficial effects may also be identified in specific embodiments that do not reflect all embodiments.

### BRIEF DESCRIPTION OF DRAWINGS

FIG. 1 is a schematic diagram of a structure of an electronic device according to an embodiment of this application;
FIG. 2 is a schematic diagram of a software structure of an electronic device according to an embodiment of this application;
FIG. 3 is a schematic diagram of an application scenario according to an embodiment of this application;
FIG. 4 is a schematic diagram of a viewfinder interface according to an embodiment of this application;
FIG. 5 is a schematic diagram of a table box selection interface according to an embodiment of this application;
FIG. 6 is a flowchart of a table extraction method according to an embodiment of this application;
FIG. 7 is a schematic diagram of entering a table extraction function according to an embodiment of this application;
FIG. 8 is another schematic diagram of entering a table extraction function according to an embodiment of this application;
FIG. 9 is still another schematic diagram of entering a table extraction function according to an embodiment of this application;
FIG. 10 is yet another schematic diagram of entering a table extraction function according to an embodiment of this application;
FIG. 11 is a schematic diagram of a table box selection interface according to an embodiment of this application;
FIG. 12 is a schematic diagram of enlarged display according to an embodiment of this application;
FIG. 13 is a schematic diagram of exporting a table according to an embodiment of this application;
FIG. 14 is a flowchart of another table extraction method according to an embodiment of this application;
FIG. 15 is a schematic diagram of multi-table box selection according to an embodiment of this application;
FIG. 16 is a schematic diagram of enlarged display according to an embodiment of this application; and
FIG. 17 is a flowchart of still another table extraction method according to an embodiment of this application.

### DESCRIPTION OF EMBODIMENTS

In embodiments of this application, words such as "example" or "for example" are used to represent giving an example, an illustration, or a description. Any embodiment or design solution described as "example" or "for example" in the embodiments of this application should not be construed as being more preferred or advantageous than other embodiments or design solutions. Exactly, the words such as "example" or "for example" are intended to present related concepts in a specific manner.

For clarity and brevity of the following embodiments, a brief description of a related technology is first provided.

An application refers to a computer program compiled for a specific application purpose of a user. Applications may be classified into different types based on purposes, such as office work, entertainment, e-commerce, finance, social, or games. Each type may include different applications, for example, entertainment-type applications may include a short video, a long video, a news, a novel, an audiobook, and the like; and office-type applications may include a spreadsheet application, a document application, and the like.

In some scenarios, the user has a need to transfer a table in a paper document to an electronic device. After the user converts the table in the paper document to a spreadsheet, the user may perform processing such as editing on the spreadsheet on the electronic device. Editing may be editing a size of the table, or may alternatively be editing content of the table.

A process in which the user transfers the table in the paper document to the electronic device may also be called table extraction. In a table extraction process, the user needs to first create a spreadsheet on the electronic device, set a size (quantities of rows and columns, a row width, a column width, and the like) of the spreadsheet to be consistent with a size of the table in the paper document, and then input content of the table in the paper document into the spreadsheet, to obtain an editable spreadsheet.

It may be learned that in the foregoing table extraction process, operations of the user are relatively cumbersome, reducing efficiency of performing table extraction by using the electronic device.

In view of this, an embodiment of this application provides a table extraction method. The method may be applied to an electronic device. The method includes: presenting a viewfinder interface, where the viewfinder interface includes a viewfinder control; and performing viewfinding on a target object in response to a tap operation on the viewfinder control, to obtain a table image including a table. The target object may be a paper document (for example, a paper book or a paper picture), or may be another non-electronic document, for example, a ground or a high molecular polymer (for example, plastic). The electronic device may then display a table box selection interface, where the table box selection interface includes a table image, a pre-selection box, and an extraction control, and the pre-selection box is used to box-select a table area in the table image; and obtain a spreadsheet corresponding to the table image in response to a tap operation on the extraction control.

In this method, the user needs to perform only viewfinding on a target object by using the electronic device, for example, photograph a table in the target object, to obtain a table image including the table, and then tap the extraction control in the box selection interface, so that the electronic device can generate a spreadsheet corresponding to the table image. It may be learned that in the method, the user does not need to manually create a table, adjust the table, and input table content, thereby improving table extraction efficiency.

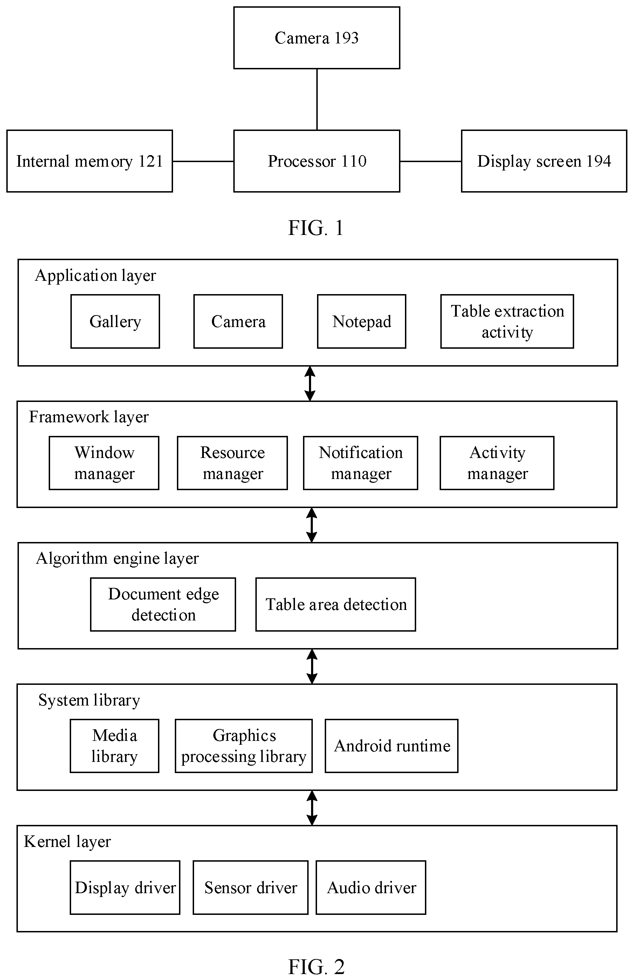

In some embodiments, the electronic device may be devices such as a mobile phone, a tablet computer, a desktop computer, a laptop computer, a notebook computer, an ultra-mobile personal computer (Ultra-mobile Personal Computer, UMPC), a handheld computer, a netbook, a personal digital assistant (Personal Digital Assistant, PDA), a wearable electronic device, and a smartwatch. A specific form of the electronic device is not particularly limited in this application. In this embodiment, a structure of the electronic device may be shown in FIG. 1. FIG. 1 is a schematic diagram of a structure of an electronic device according to an embodiment of this application.

As shown in FIG. 1, the electronic device may include a processor 110, an internal memory 121, a camera 193, and a display screen 194.

It may be understood that the structure shown in this embodiment does not specifically limit the electronic device. In some other embodiments, the electronic device may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent devices, or may be integrated into one or more processors. For example, in this application, the processor may display a table box selection interface, where the table box selection interface includes an extraction control, a table image, and a plurality of pre-selection boxes, and the plurality of pre-selection boxes are used to box-select a plurality of table areas in the table image; highlight a selected pre-selection box in the table box selection interface in response to a selection operation on the plurality of pre-selection boxes; and in response to a tap operation on the extraction control, obtain a spreadsheet based on a table area box-selected by the selected pre-selection box.

The controller may be a nerve center and a command center of the electronic device. The controller may generate an operation control signal based on instruction operation code and a timing signal, to complete control of instruction fetching and instruction execution.

A memory may be further disposed in the processor 110 to store instructions and data. In some embodiments, the memory in the processor 110 is a cache memory. The memory may store instructions or data recently used or cyclically used by the processor 110. If the processor 110 needs to use the instructions or the data again, the processor 110 may directly invoke the instructions or the data from the memory. This avoids repeated access and reduces a waiting time of the processor 110, thereby improving system efficiency.

The electronic device implements a display function by using the GPU, the display screen 194, the application processor, and the like. The GPU is a microprocessor for image processing, and is connected to the display screen 194 and the application processor. The GPU is configured to perform mathematical and geometric computing for graphics rendering. The processor 110 may include one or more GPUs that execute program instructions to generate or change display information.

The display screen 194 is configured to display an image, a video, and the like. The display screen 194 includes a display panel. The display panel may be a liquid crystal display (liquid crystal display, LCD), an organic light-emitting diode (organic light-emitting diode, OLED), an active-matrix organic light emitting diode or active-matrix organic light emitting diode (active-matrix organic light emitting diode, AMOLED), a flexible light-emitting diode (flex light-emitting diode, FLED), a Miniled, a MicroLed, a Micro-oled, a quantum dot light emitting diode (quantum dot light emitting diodes, QLED), or the like. In some embodiments, the electronic device may include one or N display screens 194, where N is a positive integer greater than 1.

A series of graphical user interfaces (graphical user interface, GUI) may be displayed on the display screen 194 of the electronic device, and all these GUIs are home screens of the electronic device. Generally, a size of the display screen 194 of the electronic device is fixed, and only limited controls can be displayed on the display screen 194 of the electronic device. A control is a GUI element. The control is a software component included in an application, and controls all data processed by the application and an interaction operation related to the data. The user may interact with the control through direct manipulation (direct manipulation), to read or edit information about the application. Generally, the control may include visual interface elements such as an icon, a button, a menu, a tab, a text box, a dialog box, a status bar, a navigation bar, and a Widget.

The electronic device may implement a shooting function by using the ISP, the camera 193, the video codec, the GPU, the display screen 194, the application processor, and the like.

The ISP is configured to process data fed back by the camera 193. For example, during photographing, a shutter is opened, light is transmitted to a photosensitive element of the camera through a lens, an optical signal is converted into an electrical signal, and the photosensitive element of the camera transmits the electrical signal to the ISP for processing, to convert the electrical signal into an image visible to naked eyes. The ISP may further perform algorithm optimization on noise, brightness, and complexion of the image. The ISP may further optimize parameters such as exposure and a color temperature of a shooting scenario. In some embodiments, the ISP may be disposed in the camera 193.

The camera 193 is configured to capture a still image or a video. An optical image of an object is generated through a lens and is projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transfers the electrical signal to the ISP to convert the electrical signal into a digital image signal. The ISP outputs the digital image signal to the DSP for processing. The DSP converts the digital image signal into an image signal in a standard format, for example, RGB or YUV. In some embodiments, the electronic device may include one or N cameras 193, where N is a positive integer greater than 1.

The digital signal processor is configured to process a digital signal, and may process another digital signal in addition to processing the digital image signal. For example, when the electronic device performs frequency selection, the digital signal processor is configured to perform Fourier transform or the like on frequency energy.

The video codec is configured to compress or decompress a digital video. The electronic device may support one or more video codecs. In this way, the electronic device can play or record videos in a plurality of encoding formats, for example, moving picture experts group (moving picture experts group, MPEG) 1, MPEG2, MPEG3, and MPEG4.

The internal memory 121 may be configured to store computer-executable program code, and the executable program code includes instructions. The processor 110 runs the instructions stored in the internal memory 121, to perform various function applications and data processing of the electronic device. For example, in this embodiment, by executing the instructions stored in the internal memory 121, the processor 110 may display a table box selection interface, where the table box selection interface includes an extraction control, a table image, and a plurality of pre-selection boxes, and the plurality of pre-selection boxes are used to box-select a plurality of table areas in the table image; highlight a selected pre-selection box in the table box selection interface in response to a selection operation on the plurality of pre-selection boxes; and in response to a tap operation on the extraction control, obtain a spreadsheet based on a table area box-selected by the selected pre-selection box.

The program storage area may store an operating system, an application required by at least one function (for example, a sound playback function or an image playback function), and the like. The data storage area may store data (for example, audio data and a phone book) and the like created during use of the electronic device. In addition, the internal memory 121 may include a high-speed random access memory, and may further include a non-volatile memory, for example, at least one magnetic disk storage device, a flash memory device, or a universal flash storage (universal flash storage, UFS). The processor 110 performs various function applications and data processing of the electronic device by running the instructions stored in the internal memory 121 and/or the instructions stored in the memory disposed in the processor.

In addition, an operating system runs on the foregoing components, for example, an iOS operating system developed by Apple Inc., an Android open-source operating system developed by Google Inc., or a Windows operating system developed by Microsoft Corporation. An application may be installed and run on the operating system.

An operating system of the electronic device may use a layered architecture, an event-driven architecture, a microkernel architecture, a micro-service architecture, or a cloud architecture. In this embodiment of this application, an Android system with the layered architecture is used as an example to describe a software structure of the electronic device.

FIG. 2 is a schematic diagram of a software structure of an electronic device according to an embodiment of this application.

In a layered architecture, software is divided into several layers, and each layer has a clear role and task. The layers communicate with each other through software interfaces. In some embodiments, an Android system is divided into four layers: an application layer, a framework layer, an algorithm engine layer, a system library, and a kernel layer from top to bottom.

The application layer may include a series of applications, for example, Camera, Gallery, Calendar, Phone, Map, Navigation, WLAN, Bluetooth, Music, Videos, Messages, Spreadsheet, and Scan. The application layer may further include a table extraction activity.

The framework layer provides an application programming interface (application programming interface, API) and a programming framework for an application at the application layer. The framework layer includes some predefined functions. The framework layer may include a window manager, a content provider, a view system, a phone manager, a resource manager, a notification manager, and the like.

The window manager is configured to manage a window program. The window manager may obtain a size of a display screen, determine whether a status bar exists, lock a screen, take a screenshot, and the like.

The content provider is configured to store and obtain data, and enable the data to be accessible to an application. The data may include a video, an image, audio, calls that are made and answered, a browsing history and bookmarks, a phone book, and the like.

The view system includes visual controls such as a text display control and a picture display control. The view system may be configured to build an application. A display interface may include one or more views. For example, a display interface including an SMS message notification icon may include a view for displaying a text and a view for displaying a picture.

The phone manager is configured to provide a communication function of the electronic device, for example, call status management (including answering, hanging up, and the like).

The resource manager provides various resources for an application, for example, a localized string, an icon, a picture, a layout file, and a video file.

The notification manager enables an application to display notification information in a status bar, and may be configured to convey a notification-type message. The displayed notification information may automatically disappear after a short stay without user interaction. For example, the notification manager is configured to provide a notification of download completion, a message reminder, and the like. The notification manager may alternatively be a notification that appears in the status bar at the top of the system in a form of a graph or scroll bar text, for example, a notification of an application running in the background, or a notification that appears on a screen in a form of a dialog window. For example, text information is prompted in the status bar, an alert sound is made, the electronic device vibrates, or an indicator light blinks.

The algorithm engine layer includes a document edge detection module, a single-table area detection module, and a multi-table area detection module. The document edge detection module is configured to detect a document edge of a target object, the single-table area detection module is configured to detect an area of a single table in the target object, and the multi-table area detection module is configured to simultaneously detect areas of a plurality of tables of the target object.

The system library may include a plurality of functional modules, for example, a surface manager (surface manager), a media library (Media Libraries), a three-dimensional graphics processing library (for example, OpenGL ES), a 2D graphics engine (for example, an SGL), and an Android runtime.

The surface manager is configured to manage a display subsystem, and provide 2D and 3D layer fusion for a plurality of applications.

The media library supports playing and recording in a plurality of common audio and video formats, a still image file, and the like. The media library may support a plurality of audio and video encoding formats, such as MPEG4, H.264, MP3, AAC, AMR, JPG, and PNG.

The three-dimensional graphics processing library is configured to implement three-dimensional graphics drawing, image rendering and composition, layer processing, and the like.

The 2D graphics engine is a drawing engine for 2D graphics drawing.

The kernel layer is a layer between hardware and software. The kernel layer includes at least a display driver, a camera driver, an audio driver, and a sensor driver.

It should be noted that although this embodiment of this application is described by using the Android system as an example, the basic principle thereof is also applicable to electronic devices based on operating systems such as iOS and Windows.

To make the technical solutions of this application clearer and easy to understand, the following describes an application scenario of a table extraction method provided in this application.

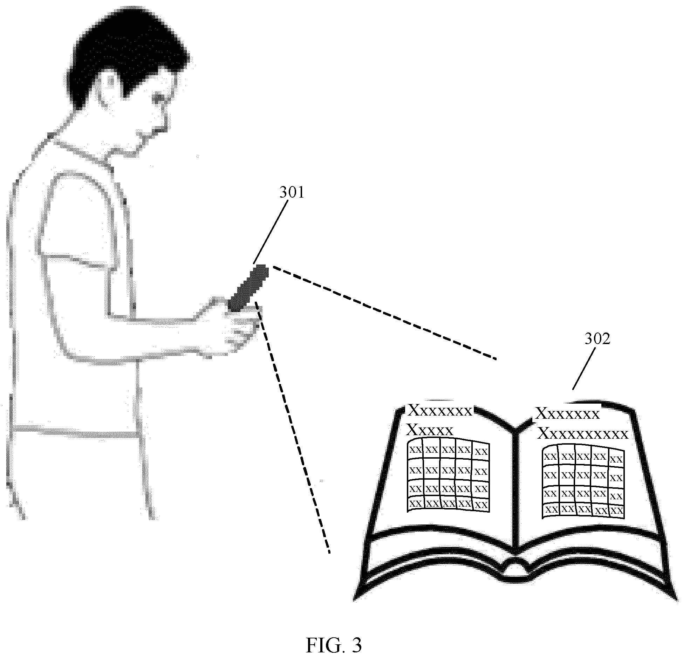

FIG. 3 is a schematic diagram of an application scenario according to an embodiment of this application.

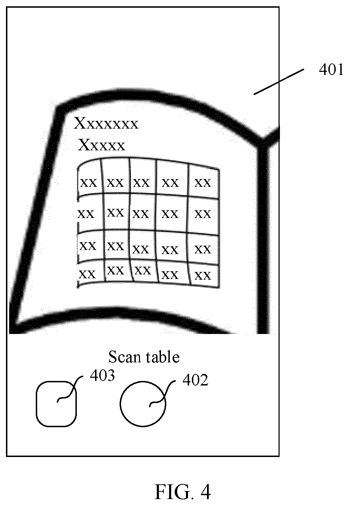

In this scenario, a user may hold an electronic device 301, and extract a table in a target object 302 by using the electronic device 301. In some examples, the user may enable a table extraction function of the electronic device 301. After the electronic device 301 enables the table extraction function, the electronic device may display a viewfinder interface. FIG. 4 is a schematic diagram of a viewfinder interface according to an embodiment of this application. The viewfinder interface includes a preview image 401, a viewfinder control 402, and an album control 403. The preview image 401 may be an image collected by a camera of the electronic device 301 for the user to preview. The viewfinder control 402 is configured to determine a video frame, that is, perform subsequent processing on which frame of image. The user may tap the viewfinder control 402, and in response to a tap operation of the user, the electronic device performs viewfinding on the target object 302, to obtain a table image including a table.

It should be noted that the target object shown in the figure being a book is merely used as an example for description. In some embodiments, the target object may alternatively be a paper, a wall, a high molecular polymer, or the like that has a table.

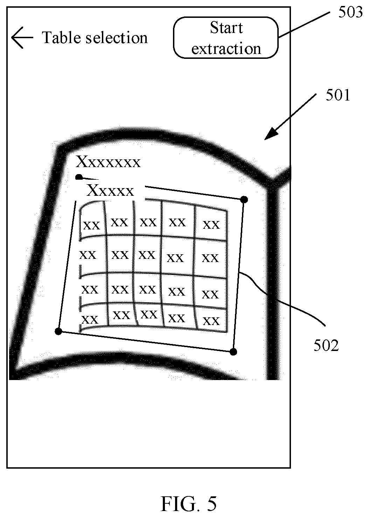

After the user taps the viewfinder control 402, the electronic device may display a table box selection interface. FIG. 5 is a schematic diagram of a table box selection interface according to an embodiment of this application. The table box selection interface includes a table image 501, a pre-selection box 502, and an extraction control 503. The table image 501 may be an image including a table in a target object. The pre-selection box 502 is configured to box-select a table area in the table image, and the pre-selection box 502 may support manual adjustment of the user, to change a size and a shape of the pre-selection box. The extraction control 503 is configured to perform table extraction to generate a spreadsheet.

In the foregoing scenario, by using the technical solution provided in this embodiment of this application, the user does not need to manually create a table, adjust the table, and input table content, thereby simplifying an operation of the user, and improving table extraction efficiency. Further, table extraction can be complete in a short time according to the technical solution, which reduces a time, and is also applicable in a time-sensitive scenario.

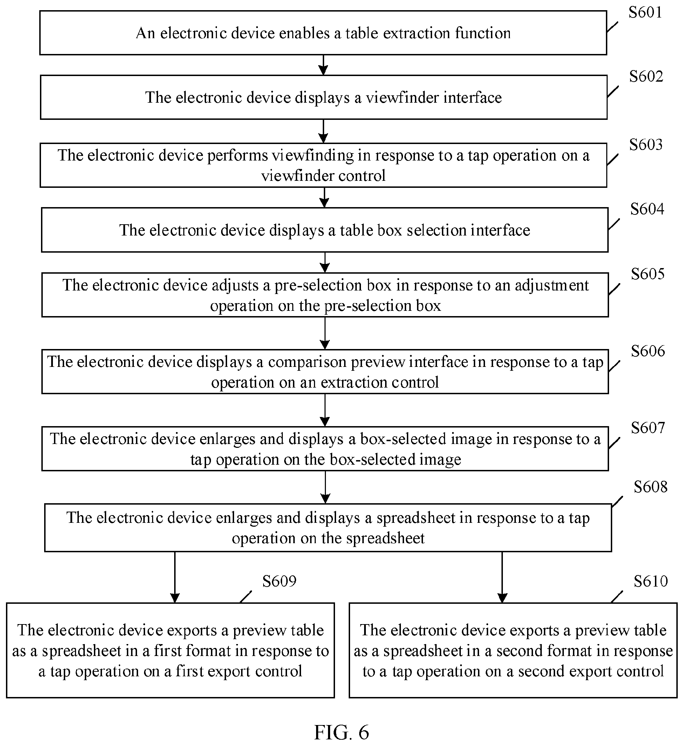

To make the technical solutions of this application clearer and easy to understand, the following describes the table extraction method provided in this embodiment of this application with reference to the accompanying drawings. FIG. 6 is a flowchart of a table extraction method according to an embodiment of this application. The method includes the following steps.

S601. An electronic device enables a table extraction function.

The electronic device may enable the table extraction function in a plurality of manners, which are separately described in the following.

### Manner 1:

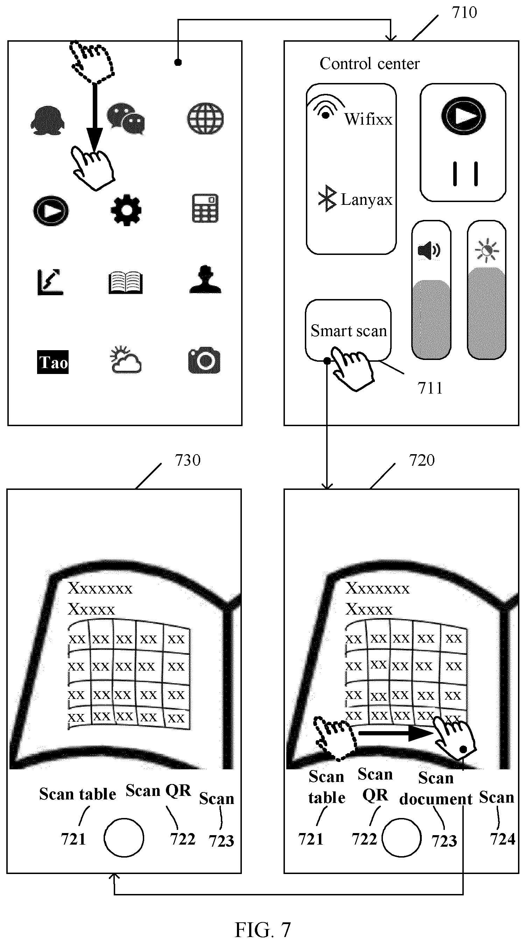

FIG. 7 is a schematic diagram of entering a table extraction function according to an embodiment of this application.

A user may control, from a control center of the electronic device, the electronic device to enable the table extraction function. In some embodiments, the user may trigger a sliding operation from the top of a screen of the electronic device to the bottom of the screen. The electronic device displays a control center interface 710 in response to the sliding operation of the user. The control center interface includes wifi setting, music control, volume control, screen brightness control, positioning control, and smart scan 711. The smart scan 711 includes a plurality of scanning functions, such as Scan QR, Scan document, Scan card, and Table extraction.

The top of the screen and the bottom of the screen are relative concepts. In the figure, only the electronic device in a portrait mode is used as an example. When the electronic device is in a landscape mode, both the top of the screen and the bottom of the screen of the electronic device change.

The user may tap the smart scan 711, and the electronic device displays a scan interface 720 in response to a tap operation on the smart scan 711. The scan interface 720 includes a Table extraction option 721, a Scan QR option 722, a Scan document option 723, a Scan card option 724, and the like. The electronic device may enter a function corresponding to the Scan QR option 722 by default, or may enter a function corresponding to another option by default. In some examples, it may be determined, based on a usage frequency of each function, which option to enter, or to enter a corresponding option when the smart scan was accessed last time, or to enter an option set by the user.

That the electronic device enters the Scan QR option 722 by default is used as an example. Then, the user may trigger a rightward sliding operation on the screen. In response to the rightward sliding operation, the electronic device switches from the current Scan QR option 722 to the Table extraction option 721. In some other examples, the user may tap the Table extraction option 721, and the electronic device may switch to the Table extraction option 721 in response to a tap operation on the Table extraction option 721. After switching to the Table extraction option 721, the electronic device may display a viewfinder interface 730. Manner 2:

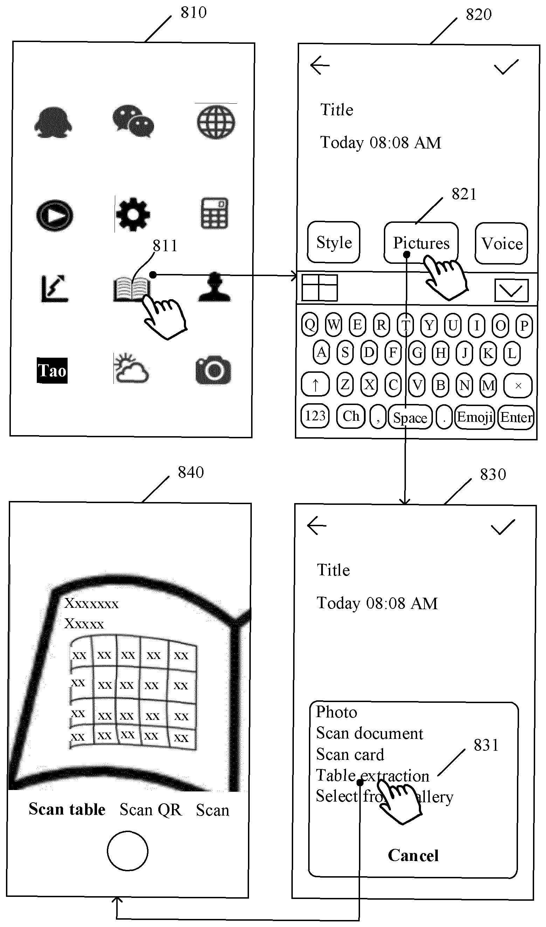

FIG. 8 is another schematic diagram of entering a table extraction function according to an embodiment of this application.

The user may tap a notes application 811 of a home screen interface 810, and the electronic device may enable the notes application in response to a tap operation on the notes application 811, to enter a notes application interface 820. The notes application interface 820 includes a picture control 821. The user may tap the picture control 821, and the electronic device displays, in response to a tap operation on the picture control 821, a plurality of options, for example, a Photo option, a Scan document option, a Scan card option, a Select from Gallery option, and a Table extraction option 831. The user may tap the Table extraction option 831 to enable the table extraction function, and then the electronic device displays a viewfinder interface 840.

### Manner 3:

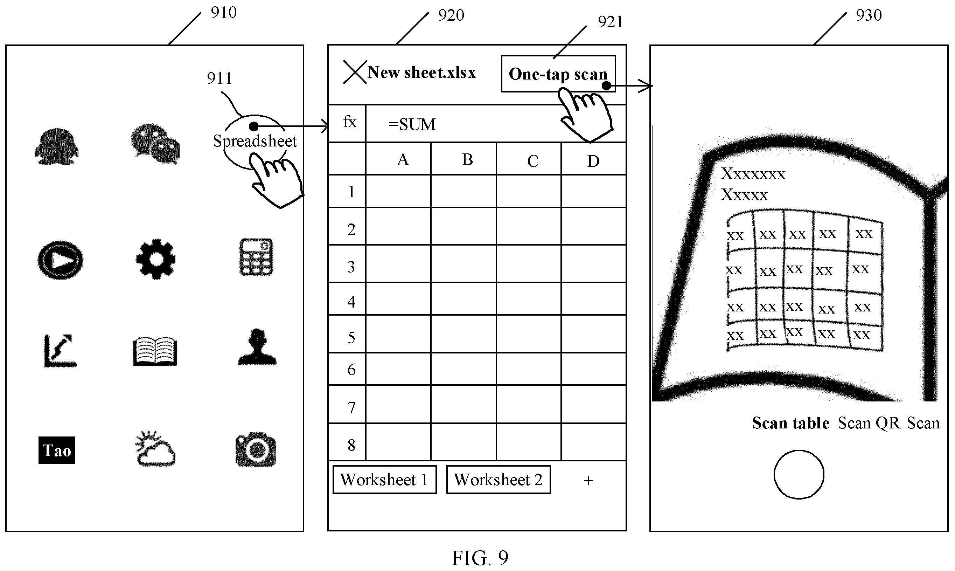

FIG. 9 is still another schematic diagram of entering a table extraction function according to an embodiment of this application.

The user may tap a spreadsheet application 911 of a home screen interface 910, and the electronic device may enable the spreadsheet application in response to a tap operation on the spreadsheet application 911, to enter a spreadsheet application interface 920. The spreadsheet application interface 920 includes a one-click extraction control 921. The user may tap the one-click extraction control 921. The electronic device enables an extraction function in response to a tap operation on the one-click extraction control 921, and then the electronic device displays a viewfinder interface 930.

### Manner 4:

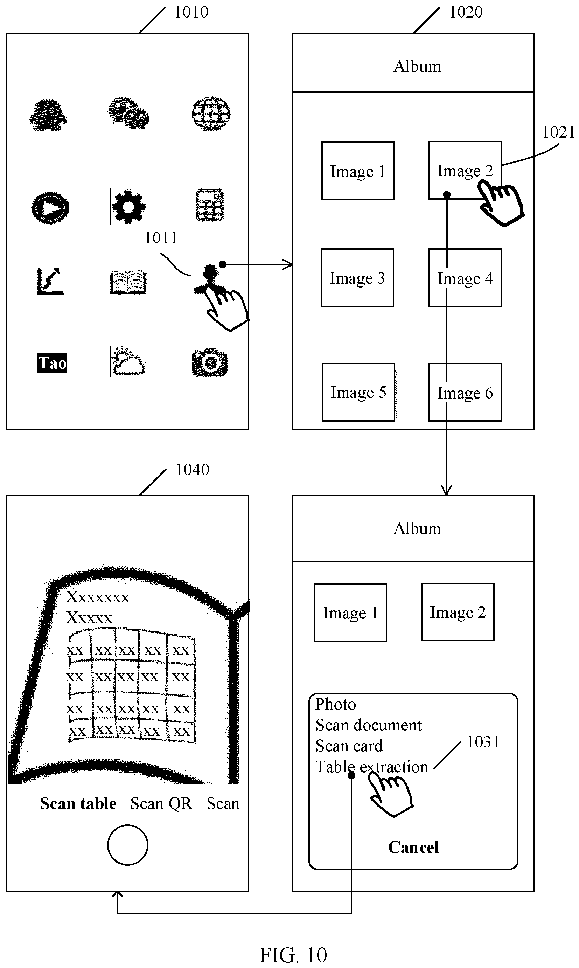

FIG. 10 is yet another schematic diagram of entering a table extraction function according to an embodiment of this application.

The user may first photograph a target object by using the electronic device to obtain an image of the target object, or may obtain the image of the target object from the Internet or another electronic device. The image of the target object may be stored in the electronic device. The user may tap a gallery application 1011 of a home screen interface 1010 to enter a gallery interface 1020. The gallery interface 1020 includes an image 1021 of the target object. In some examples, the user may touch and hold the image 1021 of the target object, and the electronic device may display a plurality of options, for example, a Photo option, a Scan document option, a Scan card option, a Select from Gallery option, and a Table extraction option 1031, in response to a touch and hold operation performed by the user on the image 1021 of the target object. The user may tap the Table extraction option 1031 to enable the table extraction function, and then the electronic device displays a viewfinder interface 1040.

It should be noted that the viewfinder interface 730, the viewfinder interface 840, the viewfinder interface 930, and the viewfinder interface 1040 are similar to the viewfinder interface shown in FIG. 4. Details are not described herein again.

The foregoing describes merely examples of enabling the table extraction function by the electronic device in this embodiment of this application. A person skilled in the art may select, based on an actual requirement, another manner to enable the table extraction function.

S602. The electronic device displays the viewfinder interface.

FIG. 4 is used as an example. The viewfinder interface may include the preview image 401, the viewfinder control 402, and the album control 403. The preview image 401 may be an image collected by a camera of the electronic device. The viewfinder control 402 is configured to determine a video frame, that is, determine to perform subsequent processing on which frame of image. The user may tap the album control 403. The electronic device displays a gallery interface in response to a tap operation on the album control 403, for example, which may be the foregoing gallery interface 1020. The user may select the image of the target object from the gallery interface, so that the user does not need to determine the video frame by using the viewfinder control 402.

S603. The electronic device performs viewfinding in response to a tap operation on the viewfinder control.

The user may tap the viewfinder control 402 of the viewfinder interface, and the electronic device may perform viewfinding in response to a tap operation on the viewfinder control 402. Further, the electronic device may locally store the image of the target object obtained through viewfinding, or may send the image of the target object to a server, for example, which may be a cloud server, so that the server processes the image of the target object.

S604. The electronic device displays a table box selection interface.

FIG. 5 is used as an example. The table box selection interface includes the table image 501, the pre-selection box 502, and the extraction control 503.

In some examples, the electronic device may detect a table image by using a table area detection algorithm to obtain an area detection result, determine a table area in the table image based on the area detection result, and display a pre-selection box on edges of the table area. The pre-selection box may include four anchor points, and the user may adjust a location and a size of the pre-selection box again by using the anchor point.

In some other examples, the electronic device may send the table image to the server. The server detects a table area in the table image, and sends an area detection result (for example, which may be locations of four anchor points) of the table area to the electronic device. The electronic device may display a pre-selection box based on the area detection result.

S605. The electronic device adjusts the pre-selection box in response to an adjustment operation on the pre-selection box.

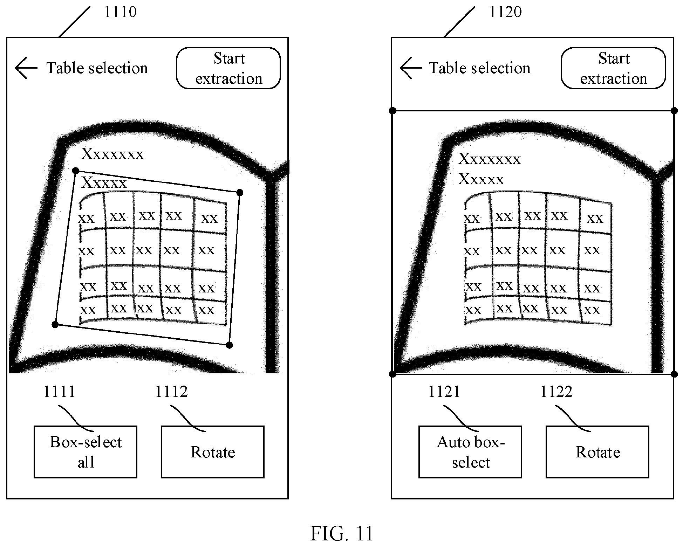

FIG. 11 is a schematic diagram of a table box selection interface according to an embodiment of this application. After the user taps the viewfinder control, the electronic device may display a table box selection interface 1110 by default, or may display a table box selection interface 1120 by default. The table box selection interface 1110 includes a box-select all control 1111 and a rotate control 1112. The table box selection interface 1120 includes an auto box-select interface 1121 and a rotate control 1122. The user may tap the box-select all control 1111 of the table box selection interface 1110, and the electronic device displays the table box selection interface 1120 in response to a tap operation on the box-select all control 1111. In this case, the pre-selection box box-selects all areas of the table image. Then, the user may tap the auto box-select control 1121 of the table box selection interface 1120, and the electronic device displays the table box selection interface 1110 in response to a tap operation on the auto box-select control 1121. In this case, the pre-selection box box-selects a table area in the table image based on the table area detection algorithm or a detection result. In some examples, the user may alternatively manually adjust a location and a size of the pre-selection box.

S606. The electronic device displays a comparison preview interface in response to a tap operation on the extraction control.

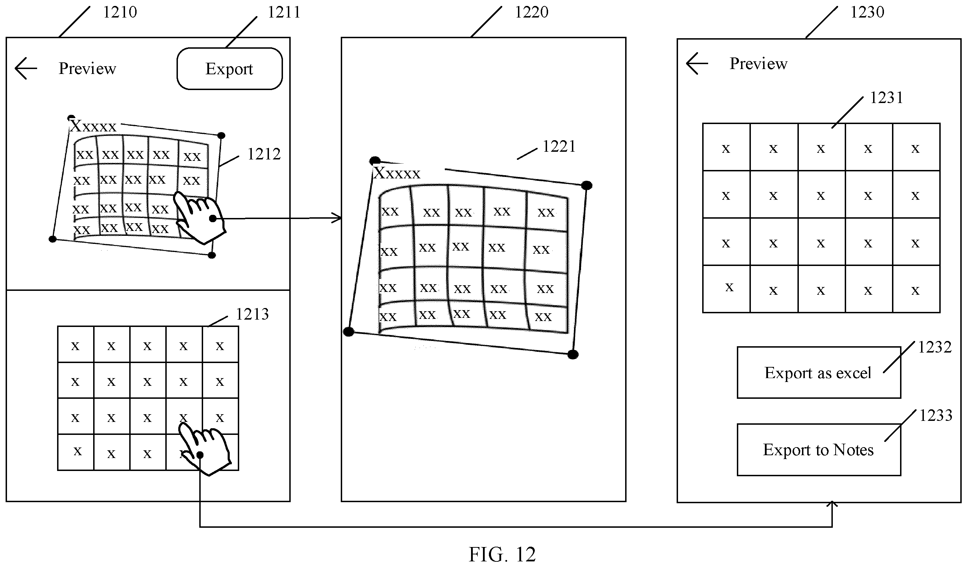

FIG. 12 is a schematic diagram of enlarged display according to an embodiment of this application. A comparison preview interface 1210 includes an export control 1211, a box-selected image 1212, and a preview table 1213 corresponding to the box-selected image 1212.

In some embodiments, the electronic device may send the box-selected image and/or the table image to the server, and the server performs table identification on the box-selected image and/or the table image to obtain a table identification result. The table identification result may include a quantity of rows and a quantity of columns of a table, content in the table, and a location of each piece of content in the table. The server may send the table identification result to the electronic device, and the electronic device displays the preview table 1213 based on the table identification result. Further, the server may identify a length-width ratio of each cell in the table image, and also send the length-width ratio to the electronic device, so that the electronic device can display the preview table 1213 based on the table identification result and the length-width ratio of each cell. In this way, a length-width ratio of a cell in the preview table 1213 is similar to or consistent with a length-width ratio of a cell in the box-selected image 1212, which facilitates the user to make a comparison and improves user experience.

In some other embodiments, when the electronic device has enough computing power, the electronic device may alternatively perform table identification on the box-selected image and/or the table image by itself to obtain a table identification result, to display the preview table 1213. Further, the electronic device may identify a length-width ratio of each cell in the table image, and display the preview table 1213 based on the table identification result and the length-width ratio of each cell.

S607. The electronic device enlarges and displays the box-selected image in response to a tap operation on the box-selected image.

Still referring to FIG. 12, the user may tap the box-selected image 1212, and the electronic device displays an enlarged display interface 1220 in response to a tap operation on the box-selected image 1212. The enlarged display interface 1220 includes an enlarged image 1221 corresponding to the box-selected image. In other words, the user may enlarge a pre-box-selected image, so that it is convenient for the user to determine whether the pre-selection box and the like need to be adjusted.

S608. The electronic device enlarges and displays a spreadsheet in response to a tap operation on the spreadsheet.

Still referring to FIG. 12, the user may also tap the preview table 1213, and the electronic device displays an enlarged display interface 1230 in response to a tap operation on the preview table 1213. The enlarged display interface 1230 includes an enlarged version of the preview table 1213, and further includes format controls, for example, a first format control 1232 and a second format control 1233. Different format controls are corresponding to different preset formats. In the enlarged display interface 1230, the user may preview the enlarged version of the preview table to determine whether table extraction is accurate. An enlarged display interface used to display the enlarged image of the box-selected image may be a first enlarged display interface, and an enlarged display interface used to display the enlarged version of the preview table may be a second enlarged display interface.

Further, in the comparison preview interface 1210, the preview table 1213 supports editing. Similarly, in the enlarged display interface 1230, the enlarged image 1231 corresponding to the preview table may also support editing, thereby facilitating further modifying or adjusting the preview table by the user, and improving accuracy of a generated spreadsheet.

It should be noted that the enlarged display interface 1230 may alternatively include only one export control, for example, include only a first format control. A person skilled in the art may design a quantity of export controls based on an actual requirement.

S609. The electronic device exports the preview table as a spreadsheet in a first format in response to a tap operation on the first format control.

The user may tap the first format control 1232, and the electronic device exports the preview table as the spreadsheet in the first format in response to a tap operation on the first format control 1232. An identifier of the first format control 1232 may be "export as excel", or may be another text or icon. The first format may be an excel format, or may be another format. An identifier and a format of the control may be designed based on an actual requirement.

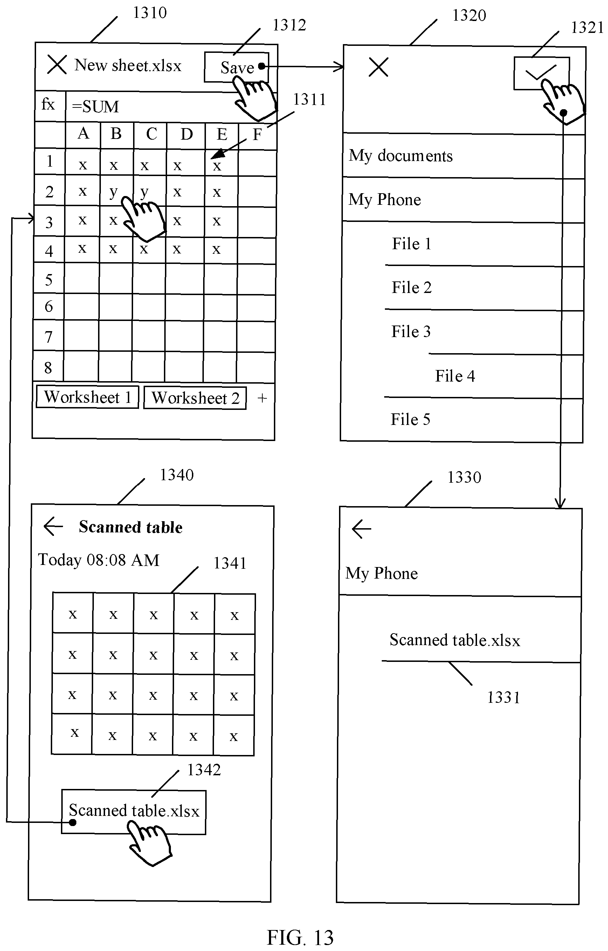

FIG. 13 is a schematic diagram of exporting a table according to an embodiment of this application.

After the user taps the first format control 1232, the electronic device displays a spreadsheet application interface 1310 in response to a tap operation on the first format control 1232. After the user taps the first format control, the electronic device may enable a spreadsheet application, and embed the preview table into a worksheet displayed by the spreadsheet application. The spreadsheet application interface 1310 includes a spreadsheet 1311 and a save control 1312. The user may edit the spreadsheet 1311, or may tap the save control 1312 to trigger the electronic device to save the spreadsheet. The electronic device displays a save interface 1320 in response to a tap operation on the save control 1312. The save interface 1320 includes a save confirmation control 1321. The user may set a save path of the spreadsheet in the save interface, and then tap the save confirmation control 1321. The electronic device saves, in response to a tap operation on the save confirmation control 1321, the spreadsheet to a save path selected by the user, and displays a save path interface 1330. The save path interface 1330 includes the spreadsheet file 1331.

S610. The electronic device exports the preview table as a spreadsheet in a second format in response to a tap operation on the second format control.

The user may alternatively tap the second format control 1233, and the electronic device exports the preview table as a spreadsheet in the second form in response to a tap operation on the second format control 1232. An identifier of the second format control 1233 may be "export to note", or may be another text or icon. The second format may be a note format, or may be another format. An identifier and a format of the control may be designed based on an actual requirement.

Still referring to FIG. 13, after the user taps the second format control 1233, the electronic device displays a notes application interface 1340 in response to a tap operation on the second format control 1233. After the user taps the second format control, the electronic device may enable a notes application, and embed the preview table in an interface displayed by the notes application. The notes application interface 1340 includes a spreadsheet 1341 and a file 1342 in the first format corresponding to the spreadsheet. The user may edit the spreadsheet 1341 in the notes application interface 1340, or may tap the file 1342 in the first format. The electronic device enables the spreadsheet application in response to a tap operation on the file 1342 in the first format. The electronic device may display the spreadsheet application interface 1310, and perform editing in the spreadsheet application interface 1310.

It should be noted that the electronic device may alternatively not display the comparison preview interface 1210 and the enlarged display interface 1220, but the electronic device directly displays the enlarged display interface 1230 shown in FIG. 12 after the user taps the extraction control 503 in the table box selection interface shown in FIG. 5. In this way, interaction costs of the user are further reduced, and table extraction efficiency is improved.

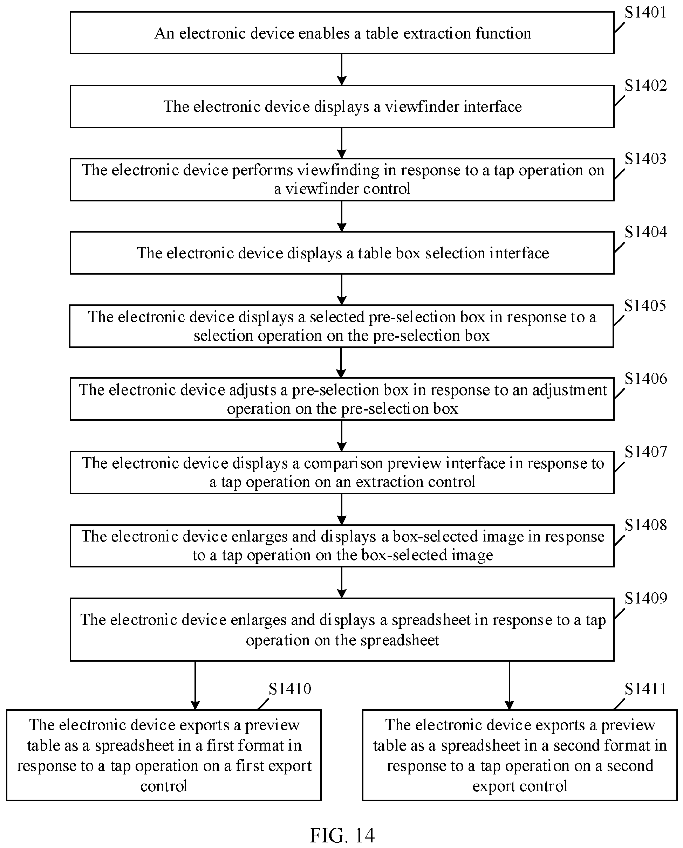

FIG. 14 is a flowchart of another table extraction method according to an embodiment of this application. A difference between this embodiment and the foregoing embodiment lies in that, in the embodiment shown in FIG. 14, an electronic device supports extraction of a plurality of tables in a target object, that is, can extract a plurality of tables at a time, thereby further improving extraction efficiency. Specifically, the method includes:
S1401. The electronic device enables a table extraction function.
S1402. The electronic device displays a viewfinder interface.
S1403. The electronic device performs viewfinding in response to a tap operation on a viewfinder control.
S1404. The electronic device displays a table box selection interface.

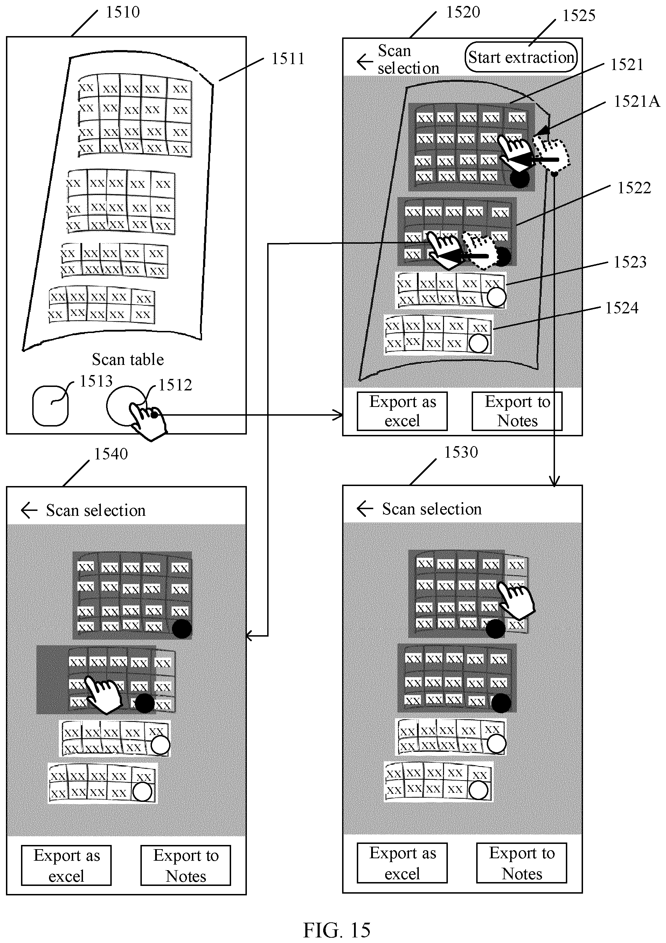

FIG. 15 is a schematic diagram of multi-table box selection according to an embodiment of this application.

A viewfinder interface 1510 includes a preview image 1511, a viewfinder control 1512, and an album control 1513. The preview image 1511 includes a plurality of table areas, the viewfinder control 1512 is configured to determine a video frame, and the album control 1513 is configured to select another image from a gallery, and extract a table in another image.

After a user taps the viewfinder control 1512, the electronic device displays a table box selection interface 1520 in response to a tap operation on the viewfinder control 1512. The table box selection interface 1520 includes an extraction control 1525 and a plurality of pre-selection boxes, for example, a pre-selection box 1521, a pre-selection box 1522, a pre-selection box 1523, and a pre-selection box 1524.

S1405. The electronic device displays a selected pre-selection box in response to a selection operation on the pre-selection box.

Still referring to FIG. 15, the user may select the pre-selection box in the table box selection interface 1520, and the electronic device highlights and displays the selected pre-selection box in response to the selection operation on the pre-selection box.

It should be noted that the highlight display is merely used as an example for description, and the electronic device may alternatively make the pre-selection box selected by the user prominent in another manner.

In some examples, the user may select the pre-selection box 1521 and the pre-selection box 1522, and the electronic device may highlight and display the pre-selection box 1521 and the pre-selection box 1522 in the table box selection interface 1520 in response to a selection operation on the pre-selection box 1521 and the pre-selection box 1522. The pre-selection box 1523 and the pre-selection box 1524 in the table box selection interface 1520 are pre-selection boxes not selected by the user.

In some embodiments, the user may alternatively select only one pre-selection box.

S1406. The electronic device adjusts the pre-selection box in response to an adjustment operation on the pre-selection box.

Still referring to FIG. 15, the user may adjust the pre-selection box in the table box selection interface 1520. That the user adjusts the pre-selection box 1521 is used as an example. The user may adjust a size of an area box-selected by the pre-selection box 1521, or may adjust a location of the pre-selection box 1521.

In some examples, the user may touch and hold a boundary 1521A of the pre-selection box 1521 and perform a sliding operation. The electronic device may adjust, based on the sliding operation on the boundary 1521A, the size of the area box-selected by the pre-selection box 1521. An adjusted pre-selection box is shown in a table box selection interface 1530.

In some other examples, the user may alternatively touch and hold the pre-selection box 1521, and perform a drag-and-drop operation. The electronic device adjusts the location of the pre-selection box based on the drag-and-drop operation on the pre-selection box 1521. An adjusted pre-selection box is shown in a table box selection interface 1540.

S1407. The electronic device displays a comparison preview interface in response to a tap operation on the extraction control.

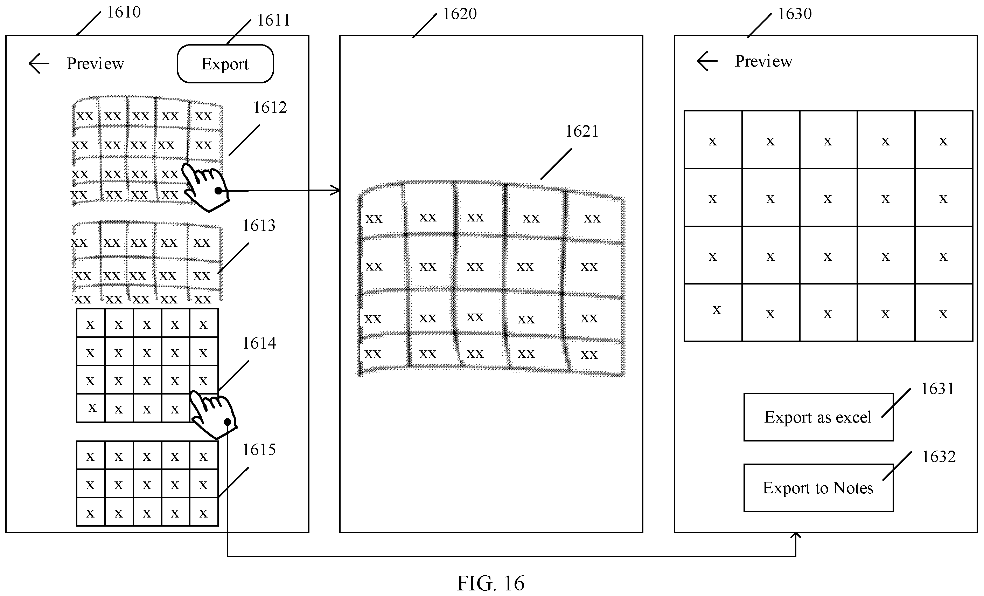

FIG. 16 is a schematic diagram of enlarged display according to an embodiment of this application. In some examples, the user may tap the extraction control 1525 in the table box selection interface 1520, and the electronic device displays a comparison preview interface 1610 in response to a tap operation on the extraction control 1525. The comparison preview interface 1610 includes an export control 1611, a box-selected image 1612, a box-selected image 1613, a preview table 1614 corresponding to the box-selected image 1612, and a preview table 1615 corresponding to the box-selected image 1613.

Similar to the foregoing single-table extraction procedure, a process in which the electronic device displays the preview table 1614 and the preview table 1615 based on table identification results is not described herein again.

S1408. The electronic device enlarges and displays the box-selected image in response to a tap operation on the box-selected image.

Still referring to FIG. 16, the user may tap the box-selected image 1612 or the box-selected image 1613, and the electronic device may display an enlarged display interface 1620. That the user taps the box-selected image 1612 is used as an example. The enlarged display interface 1620 includes an enlarged image 1621 corresponding to the box-selected image 1612. Similarly, the user may also tap the box-selected image 1613, so that the electronic device enlarges and displays the box-selected image 1613. In other words, the user may enlarge a pre-box-selected image, so that it is convenient for the user to determine whether a size, a location, and/or the like of the pre-selection box need to be adjusted.

S1409. The electronic device enlarges and displays a spreadsheet in response to a tap operation on the spreadsheet.

Still referring to FIG. 16, the user may tap the preview table 1614 or the preview table 1615, and the electronic device may display an enlarged display interface 1630. That the user taps the preview table 1614 is used as an example. The electronic device may display enlarged versions of the preview table 1614 and the preview table 1615 in the enlarged display interface 1630 in response to a tap operation on the preview table 1614. The enlarged versions of the preview table 1614 and the preview table 1615 are separated by a preset distance. In some other examples, that the user taps the preview table 1614 is used as an example. The electronic device may display an enlarged version of the preview table 1614 in the enlarged display interface 1630 in response to a tap operation on the preview table 1614.

The enlarged display interface 1630 further includes a first format control 1631 and a second format control 1632. The first format control 1631 is configured to export the preview table as a spreadsheet in a first format, and the second format control 1632 is configured to export the preview table as a spreadsheet of a second format.

S1410. The electronic device exports the preview table as the spreadsheet in the first format in response to a tap operation on the first format control.

S1411. The electronic device exports the preview table as the spreadsheet in the second format in response to a tap operation on the second format control.

It should be noted that a part in the embodiment shown in FIG. 14 that is the same as or similar to that in the embodiment shown in FIG. 6 is not described in detail in the embodiment shown in FIG. 14. For specific content, refer to the embodiment shown in FIG. 6.

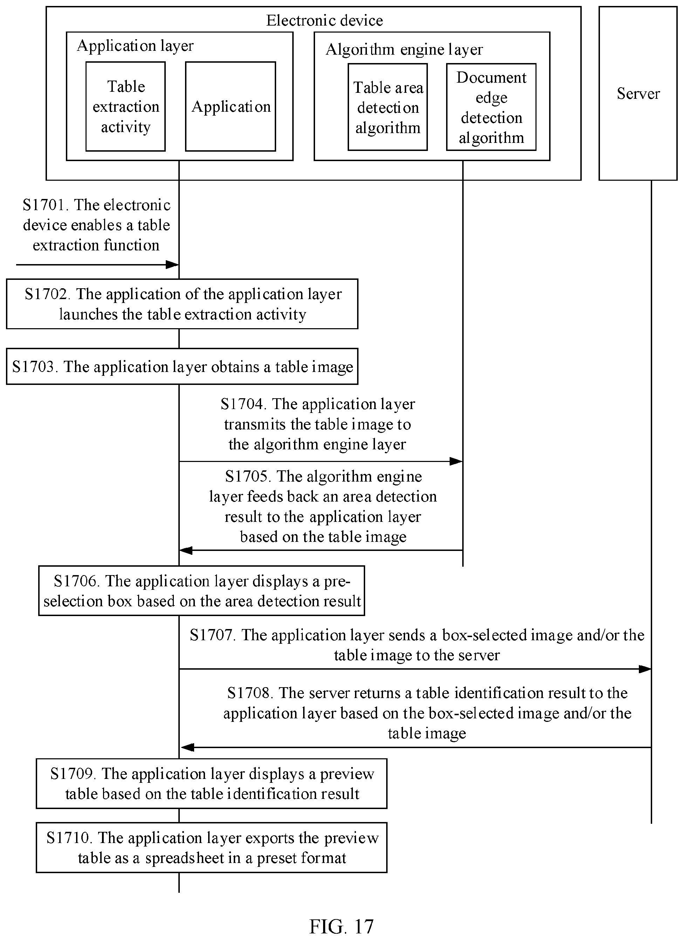

FIG. 17 is a flowchart of still another table extraction method according to an embodiment of this application. The method includes the following steps.

S1701. An electronic device enables a table extraction function.

In some examples, a user may enable the table extraction function of the electronic device in at least one of the four manners described in the foregoing embodiment. Details are not described herein again.

S1702. An application of an application layer launches a table extraction activity.

The application layer may include applications such as Camera, Gallery, and Notepad, and the table extraction activity. When the electronic device enables the table extraction function, the application of the application layer may launch the table extraction activity, for example, the applications such as Camera, Gallery, and Notepad launch the table extraction activity.

S1703. The application layer obtains a table image.

In some examples, the electronic device may obtain the table image based on a tap operation performed by the user on a viewfinder control in a viewfinder interface, or may obtain the table image based on an image selected by the user from a gallery. For a specific process, refer to the foregoing embodiment. Details are not described herein again.

S1704. The application layer transmits the table image to an algorithm engine layer.

After obtaining the table image, the application layer may transmit the table image to the algorithm engine layer. The algorithm engine layer may include a table area detection algorithm, a document edge detection algorithm, and the like. The table area detection algorithm may include a single-table area detection algorithm and a multi-table area detection algorithm.

S1705. The algorithm engine layer feeds back an area detection result to the application layer based on the table image.

The algorithm engine layer may detect a table area in the table image based on the table area detection algorithm to obtain the area detection result, and the area detection result may be locations of four anchor points (one pre-selection box).

S1706. The application layer displays a pre-selection box based on the area detection result.

After receiving the area detection result, the application layer may determine locations of four anchor points of one pre-selection box, and display the pre-selection box based on the locations of the anchor points. Certainly, when the table image includes a plurality of table areas, the area detection result may also include a plurality of groups of anchor points. Each group of anchor points includes four anchor points, and each group of anchor points is corresponding to one pre-selection box.

S1707. The application layer sends a box-selected image and/or the table image to a server.

The user may or may not adjust the pre-selection box. The application layer may send an image in the pre-selection box, namely, the box-selected image, to the server, or may send the table image to the server, or may send both the box-selected image and the table image to the server.

S 1708. The server returns a table identification result to the application layer based on the box-selected image and/or the table image.

After receiving the box-selected image and/or table image, the server may identify the box-selected image and/or table image to obtain the table identification result. The table identification result may include a quantity of rows and a quantity of columns of a table, content in the table, and a location of each piece of content in the table. Further, the table identification result may further include a length-width ratio of each cell. After determining the table identification result, the server feeds back the table identification result to the electronic device.

In some other examples, when computing power of the electronic device is sufficient, the box-selected image and/or the table image may alternatively be sent to the algorithm engine layer. A related algorithm for table identification is deployed at the algorithm engine layer to identify a table to obtain a table identification result.

S 1709. The application layer displays a preview table based on the table identification result.

After determining the table identification result, the application layer displays the preview table based on the table identification result.

S1710. The application layer exports the preview table as a spreadsheet in a preset format.

The electronic device may export the preview table as the spreadsheet in the preset format in response to a tap operation performed by the user on an export control. The preset format may be the first format or the second format in the foregoing embodiments.

It should be noted that this embodiment is similar to the foregoing embodiment shown in FIG. 6 or FIG. 14. For specific content, refer to the foregoing embodiments.

Based on the foregoing content description, this embodiment of this application provides the table extraction method. The method may be applied to the electronic device. The method includes: presenting a viewfinder interface, where the viewfinder interface includes a viewfinder control; and performing viewfinding on a target object in response to a tap operation on the viewfinder control, to obtain a table image including a table. The target object may be a paper document (for example, a paper book or a paper picture), or may be another non-electronic document, for example, a ground or a high molecular polymer (for example, plastic). The electronic device may then display a table box selection interface, where the table box selection interface includes a table image, a pre-selection box, and an extraction control, and the pre-selection box is used to box-select a table area in the table image; and obtain a spreadsheet corresponding to the table image in response to a tap operation on the extraction control.

In this method, the user needs to perform only viewfinding on the target object by using the electronic device, for example, photograph a table in the target object, to obtain the table image including the table, and then tap the extraction control in the box selection interface, so that the electronic device can generate the spreadsheet corresponding to the table image. It may be learned that in the method, the user does not need to manually create a table, adjust the table, and input table content, thereby improving table extraction efficiency.

An embodiment further provides a computer-readable storage medium, and the computer-readable storage medium includes instructions. When the instructions are run on an electronic device, the electronic device is enabled to perform related method steps in FIG. 6, FIG. 14, and FIG. 17, to implement the method in the foregoing embodiments.

An embodiment further provides a computer program product including instructions. When the computer program product runs on an electronic device, the electronic device is enabled to perform related method steps in FIG. 6, FIG. 14, and FIG. 17, to implement the method in the foregoing embodiments.

The foregoing descriptions are merely specific implementations of this application, but are not intended to limit the protection scope of this application. Any change or replacement made within the technical scope disclosed in this application shall fall within the protection scope of this application. Therefore, the protection scope of this application shall be subject to the protection scope of the claims.

## Claims

1. A table extraction method, comprising:
displaying a table box selection interface, wherein the table box selection interface comprises an extraction control, a table image, and a plurality of pre-selection boxes, and the plurality of pre-selection boxes are used to box-select a plurality of table areas in the table image;
highlighting a selected pre-selection box in the table box selection interface in response to a selection operation on the plurality of pre-selection boxes; and
in response to a tap operation on the extraction control, obtaining a spreadsheet based on a table area box-selected by the selected pre-selection box.

2. The method according to claim 1, wherein the obtaining a spreadsheet based on a table area box-selected by the selected pre-selection box comprises:
sending, to a server, the table image and/or a box-selected image corresponding to the table area selected by the selected pre-selection box;
receiving a table identification result fed back by the server based on the table image and/or the box-selected image, wherein the table identification result comprises a quantity of rows and a quantity of columns of a table, content in the table, and a location of each piece of content in the table; and
obtaining the spreadsheet based on the table identification result.

3. The method according to claim 2, wherein the obtaining the spreadsheet based on the table identification result comprises:
displaying a comparison preview interface based on the table identification result, wherein the comparison preview interface comprises an export control, a plurality of box-selected images, and a plurality of preview tables corresponding to the plurality of box-selected images; and
obtaining spreadsheets corresponding to the plurality of preview tables in response to a tap operation on the export control.

4. The method according to claim 3, wherein the method further comprises:
adjusting at least one preview table in the plurality of preview tables in response to an editing operation on the at least one preview table; and
the obtaining spreadsheets corresponding to the plurality of preview tables in response to a tap operation on the export control comprises:
in response to the tap operation on the export control, obtaining a spreadsheet corresponding to an adjusted preview table and/or a spreadsheet corresponding to an unadjusted preview table.

5. The method according to claim 3 or 4, wherein the method further comprises:
displaying a first enlarged display interface in response to a tap operation on the box-selected image, wherein the enlarged display interface comprises an enlarged image of the box-selected image.

6. The method according to claim 3 or 4, wherein the method further comprises:
displaying a second enlarged display interface in response to a tap operation on the preview table, wherein the second enlarged display interface comprises an enlarged version of the preview table.

7. The method according to claim 6, wherein the second enlarged display interface further comprises a format control, and the method further comprises:
obtaining the spreadsheets corresponding to the plurality of preview tables in response to a tap operation on the format control, wherein a format of the spreadsheets is a preset format corresponding to the format control.

8. The method according to any one of claims 1-7, wherein the method further comprises:
displaying a viewfinder interface, wherein the viewfinder interface comprises a preview image and a viewfinder control; and
the displaying a table box selection interface comprises:
displaying a box selection interface in response to a tap operation on the viewfinder control.

9. A table extraction method, comprising:
displaying a table box selection interface, wherein the table box selection interface comprises an extraction control, a table image, and a pre-selection box, and the pre-selection box is used to box-select a table area in the table image; and
in response to a tap operation on the extraction control, obtaining a spreadsheet based on a table area box-selected by the pre-selection box.

10. An electronic device, comprising a camera, a processor, and a memory, wherein
the camera collects an image; and
the memory stores one or more computer programs, the one or more computer programs comprise instructions, and when the instructions are executed by the processor, the electronic device is enabled to perform the table extraction method according to any one of claims 1-9.

11. A computer storage medium, comprising computer instructions, wherein when the computer instructions are run on an electronic device, the electronic device performs the table extraction method according to any one of claims 1-9.
